# EUROPÄISCHE PATENTSCHRIFT

(11) **EP 3 344 383 B1**
(45) Veröffentlichungstag und Bekanntmachung des Hinweises auf die Patenterteilung: **14.08.2019**
(21) Anmeldenummer: 16757266.8
(22) Anmeldetag: 29.08.2016
(51) Int. Cl.: B01J 19/12, G01N 15/14, G01N 15/10, G01N 21/64

(54) **VORRICHTUNG UND VERFAHREN ZUR OPTISCHEN STIMULATION EINER OPTISCH AKTIVIERBAREN BIOLOGISCHEN PROBE**
DEVICE AND METHOD FOR THE OPTICAL STIMULATION OF AN OPTICALLY ACTIVATABLE BIOLOGICAL SAMPLE
DISPOSITIF ET PROCÉDÉ DE STIMULATION OPTIQUE D'UN ÉCHANTILLON BIOLOGIQUE OPTIQUEMENT ACTIVABLE

(30) Priorität: 03.09.2015 DE 102015216841
(43) Veröffentlichungstag der Anmeldung: 11.07.2018
(73) Patentinhaber: Albert-Ludwigs-Universität Freiburg, 79098 Freiburg (DE)
(72) Erfinder: BRENKER, Kathrin, 79102 Freiburg (DE); YANG, Jianying, 79100 Freiburg (DE); RETH, Michael, 79104 Freiburg (DE)
(74) Vertreter: Rösler, Uwe
(86) Internationale Anmeldenummer: PCT/EP2016/070277
(87) Internationale Veröffentlichungsnummer: WO 2017/036999

(56) Entgegenhaltungen:
- WO-A1-95/09814
- US-A- 3 734 845
- US-A1- 2014 084 179

## Beschreibung

### Technisches Gebiet

Die Erfindung bezieht sich auf eine Vorrichtung sowie ein Verfahren zur optischen Stimulation einer optisch aktivierbaren biologischen Probe mit wenigstens einer Lichtquelle, die Licht wenigstens einer vorgebbaren Wellenlänge emittiert, das mittel- oder unmittelbar auf die Probe trifft.

### Stand der Technik

Zur quantitativen Vermessung sowie auch der molekularen Charakterisierung biologischer Zellen werden so genannte Durchflusszytometer eingesetzt, die eine Durchflussmesszelle umfassen, zumeist in Form einer lichttransparenten Mikrokanalküvette, durch die Zellen aus einer bevorrateten Zellsuspension vereinzelt in serieller Abfolge strömen. Längs der Mikrokanalküvette ist eine Lichtquelleanordnung angeordnet, zumeist in Form einer oder mehrerer Laser, deren Lichtstrahl jede einzelne Zelle bei Durchtritt durch einen definierten Messbereich längs der Mikrokanalküvette seitlich bestrahlt bzw. durchstrahlt. Mittels geeignet angeordneter Fotodetektoren sind sowohl streuende Anteile des anregenden Laserlichtes sowie auch durch die Laserstrahlung angeregte Fluoreszenzlichterscheinungen, die in aller Regel von an den Zellen bzw. Zellbestandteilen anhaftenden Fluoreszenzmarkern herrühren, erfassbar, die der simultanen Analyse von physikalischen und molekularen Eigenschaften der einzelnen Zellen dienen.

Aus der Druckschrift WO 2005/017498 A1 ist ein gattungsgemäßes Durchflusszytometer zu entnehmen, das anstelle der vorstehend erwähnten Laser als Lichtquelle Licht emittierende Dioden, kurz LEDs aufweist. Die LEDs bestrahlen die einzelnen Zellen unter unterschiedlichen Einfallwinkeln und/oder mit jeweils unterschiedlichen Wellenlängen. In geeigneter Weise dient eine Vielzahl von Detektoren zur Erfassung der gestreuten Lichtanteile sowie des im Wege der Fluoreszenz von Seiten der Zelle bzw. der an den Zellen anhaftenden fluoreszierenden Markern emittierten Fluoreszenzlichtes. Da nur sehr wenige biologische Zellen selbst zur Fluoreszenz optisch angeregt werden können, werden Fluoreszenzfarbstoffe an bestimmte Bestandteile der Zelle angebunden. Zur "Einfärbung" der Zellen werden typischerweise fluoreszenzfarbstoff-markierte Antikörper eingesetzt, die sich selektiv an bestimmte Oberflächenproteine der Zelle ankoppeln. Darüber hinaus sind auch andere Ankoppelmechanismen bekannt, über die sich Fluoreszenzmarker intrazellulär an bestimmte Zellbestandteile oder intrazelluläre Ionen anlagern.

Bedient man sich zudem über unterschiedliche Fluoreszenzeigenschaften verfügende Farbstoffe, zu deren Fluoreszenzanregung spezifische Anregungswellenlängen erforderlich sind, so kann durch den Einsatz verschiedenfarbiger Lichtquellen sowie durch Vorsehen entsprechender Filter innerhalb eines Durchflusszytometers die Anzahl voneinander unterscheidbarer Zellcharakteristika und damit verbunden die mit Hilfe des Durchflusszytometers detektierbare Informationsdichte signifikant erhöht werden.

Typische Anwendungen von Durchflusszytometern sind die Analyse des DNA-Gehaltes zum Beispiel von Tumorzellen oder die Bestimmung der Konzentration von Zellen, die über geeignet eingefärbte Antikörper identifizierbar sind, wie vorstehend erwähnt. Über die bloße Phänotypisierung einzelner Zellen hinaus kann die Detektion von Fluoreszenzlichtsignalen auch für die funktionelle Charakterisierung von Zellen eingesetzt werden. Eine wichtige Methode hierbei ist beispielsweise die Analyse von biochemischen Signalen oder Signalwegen wie beispielsweise lonenkonzentrationen oder Enzymreaktionen als Reaktion auf eine optische Stimulation von Zellen. Bei derartigen Untersuchungen ist es von essentieller Bedeutung, dass Signalveränderungen, die durch das optische Stimulationsereignis initiierbar sind, möglichst ohne Zeitverlust, vorzugsweise instantan, messtechnisch erfasst werden. Mit anderen Worten ist es erstrebenswert, dass zwischen der Manipulation des biochemischen Signals bzw. des Signalweges und der stattfindenden Messung des Effektes möglichst wenig Zeit verstreicht.

Ein bekanntes Durchflußzytometer ist in der Druckschrift US 2005/0225745 offenbart, bei dem eine erste Lichtquelle auf die zu untersuchende Flüssigkeitsprobe gerichtet ist, um vorwärts-gestreutes sowie seitwärts-gestreutes Licht an der Probe zu erzeugen. Eine zweite Lichtquelle vermag in Wechselwirkung mit der Probe Fluoreszenzlicht zu erzeugen. Ein erster Detektor detektiert das vorwärts-gestreute, ein zweiter Detektor das seitwärts-gestreute Licht und ein dritter Detektor detektiert das Fluoreszenzlicht.

Die Druckschrift WO 99/42809 beschreibt eine Anordnung zur Zelluntersuchung im Wege optischer Stimulation. Eine Flüssigkeit, die zu analysierende Zellen enthält durchströmt einen Lichttransparenten Kanal, an dessen Kanalwand wenigstens ein derart modifizierter Wandbereich vorgesehen ist, an den sich Zellen anhaften. Ebendieser Wandbereich wird beleuchtet und das den Wandbereich und die Zellen transmittierende Licht wird detektiert und analysiert. Die Lichtquellen können beliebig gewählt sein und haben keinen weiteren Kontakt zur übrigen Messanordnung.

Die Druckschrift US 3 734 845 A offenbart ein hohlzylindrisches Reaktionsgefäß, durch das eine Reaktionsflüssigkeit in einem Kreislauf strömt und in dem eine bestimmte fotochemische Reaktion erfolgen soll. In einem Hohlraum in der Mitte des Reaktionsgefäßes ist eine Quecksilberlampe angeordnet. Zwischen der Quecksilberlampe und dem Hohlraum des Reaktionsgefäßes zirkuliert eine Wärme erzeugende Flüssigkeit, um die Hohlraumwand zu erwärmen und eine unerwünschte Ablagerung von Teer an der Wand zu vermeiden.

Die Druckschrift US 2014/084179 A1 offenbart eine Expositionskammer zur Reduzierung von pathogenen Keimen in einer biologischen Flüssigkeit, wie beispielsweise Blut oder Blutbestandteile. Die Flüssigkeit wird hierzu durch einen transparenten Fluidkanal geführt und mit UV-Strahlung bestrahlt. Um eine möglichst große Expositionsoberfläche zwischen der UV-Strahlung und der Flüssigkeit zu schaffen, ist das Durchflussrohr der Vorrichtung mänder- bzw. serpentinenartig ausgebildet, so dass die Flüssigkeit bedingt durch die Vielzahl der Fluidleitungsumkehrstellen stark durchmischt wird und mit der UV-Strahlung im gesamten Volumen in Wechselwirkung treten kann.

Die Druckschrift WO 95/09814 A1 offenbart eine Anlage zur Wassersterilisation mittels ultravioletter Strahlung. Die Vorrichtung enthält eine langgestreckte Behandlungskammer, in der in Längsrichtung eine UV-Lampe angeordnet ist und Licht im Wellenlängenbereich von 245 nm bis 265 nm emittiert. Die UV-Lampe wird mittels einer Fluidströmung temperiert. Die Oberflächentemperatur der Lampe wird konstant gehalten, indem entweder ein Gebläse oder ein Erhitzer zugeschaltet wird.

### Darstellung der Erfindung

Der Erfindung liegt die Aufgabe zugrunde, eine Vorrichtung sowie ein Verfahren zur optischen Stimulation einer optisch aktivierbaren biologischen Probe derart anzugeben, so dass kontrolliert reproduzierbare Rahmenbedingungen für die optische Stimulation der Probe geschaffen werden, unter denen sich stimulationsbedingte Veränderungen in den biochemischen bzw. biologischen Signalen bzw. Signalwegen in der Probe ausbilden. Zudem gilt es die Möglichkeit zu schaffen, dass die sensorische Erfassung der sich stimulationsbedingt einstellenden Veränderungen der biochemischen bzw. biologischen Signale bzw. Signalwege vermittels eines Durchflusszytometers in situ oder zumindest innerhalb einer definierten Zeitspanne nach der optischen Stimulation, das heißt innerhalb von Sekunden bis Minuten, möglich wird.

Die Lösung der der Erfindung zugrundeliegenden Aufgabe ist im Anspruch 1 angegeben, die eine Vorrichtung zur optischen Stimulation beschreibt. Gegenstand des nebengeordneten Anspruches 7 umfasst eine Anordnung zur Untersuchung einer optisch aktivierten biologischen Probe. Anspruch 9 beschreibt ein Verfahren zur Durchführung einer optischen Stimulation einer optisch aktivierbaren biologischen Probe. Den Erfindungsgedanken in vorteilhafter Weise weiterbildende Merkmale sind Gegenstand der Unteransprüche sowie der weiteren Beschreibung unter Bezugnahme auf die Ausführungsbeispiele zu entnehmen.

Die lösungsgemäße Vorrichtung zur optischen Stimulation einer optisch aktivierbaren biologischen Probe mit einer Vielzahl von Lichtquellen, die Licht wenigstens einer vorgebbaren Wellenlänge emittiert, das mittel- oder unmittelbare auf die Probe trifft, gemäß den Merkmalen des Oberbegriffes des Anspruches 1, zeichnet sich lösungsgemäß dadurch aus, dass die innere Mantelfläche die wenigstens eine Begrenzungswand darstellt, über die die optisch aktivierbare Probe thermisch an den Flüssigkeitskreislauf ankoppelt und für das Licht der Vielzahl von Lichtquellen transparent ist. Zudem ist die Vielzahl von Lichtquellen mit einer axialen Verteilung und/oder in Umfangsrichtung des Hohlkanalabschnittes orientierten Verteilung sowie mit jeweils einer radial nach innen orientierten, den Lichtquellen zugeordneten Abstrahlungs-Apertur angeordnet. Die Lichtquellen sind dabei wenigstens in zwei Gruppen unterteilbar, jeweils enthaltend wenigstens eine Lichtquelle. Die Lichtquellen der wenigstens zwei Gruppen unterscheiden sich in einer der nachfolgenden Eigenschaften: Strahlungsintensität, emittierte Wellenlänge oder Wellenlängenspektrum.

Unter dem Begriff der "optischen Stimulation" ist grundsätzlich eine Wechselwirkung einer optisch aktivierbaren, biologischen Probe mit Licht zu verstehen. Die optische Stimulation schließt die Bedeutung der folgenden Begriffe mit ein: optische Aktivierung, optische Regulierung.

Unter "optisch aktivierbarer, biologischer Probe" sind biologische Zellen oder Zellbestandteile zu verstehen, die per se oder durch biochemische Konfektionierung, bspw. durch Anlagerung wenigstens einer optisch aktivierbaren Substanz an die Probe, zur Wechselwirkung mit Licht befähigt sind.

In Abkehr von der bisherigen Praxis zur optischen Stimulation einer optisch aktivierbaren biologischen Probe, bei der die Probe zumeist in einer Küvettenanordnung bevorratet ist und mittels manueller Bestrahlung optisch angeregt wird, wobei zumindest die Bestrahlungsintensität keinem definierten Regulativ unterliegt und darüber hinaus die Proben- und Messtemperatur von der jeweils vorherrschenden Umgebungstemperatur abhängt, schafft die lösungsgemäße Vorrichtung durch die thermische Kopplung sowohl der Vielzahl von Lichtquellen als auch der optisch aktivierbaren Probe an einen fluiddurchströmten, temperaturregulierten Flüssigkeitskreislauf physikalisch bestimmte Messbedingungen, die Voraussetzung für wissenschaftlich belastbare, d.h. reproduzierbare Messsignale sind, die mit Hilfe eines Durchflusszytometers gewonnen werden.

Die lösungsgemäße Vorrichtung gewährleistet zum einen den Betrieb der Vielzahl von Lichtquellen bei konstanter Temperatur. Auf diese Weise werden temperaturbedingte Schwankungen bzw. Änderungen sowohl in der emittierten Lichtintensität als auch Lichtwellenlänge vermieden. Die Vielzahl von Lichtquellen kann auf diese Weise thermisch frequenzstabilisiert betrieben werden. Darüber hinaus kann ein temperaturabhängiger Einfluss auf die durch optische Stimulation erzeugten biochemischen, bzw. biologischen Signaländerungen ausgeschlossen werden. Derartige Temperaturabhängigkeiten würden sich insbesondere nachteilhaft bei weiterführenden Analysen der messtechnisch erfassten Signale in Bezug auf zellphysiologische Parameter, wie z.B. pH-Wert, Calcium, Membranpotenzial etc., auswirken.

In einer bevorzugten Ausführungsform ist die Vielzahl von Lichtquellen zu Zwecken der thermischen Kopplung an den temperierten, fluiddurchströmten Flüssigkeitskreislauf derart ausgebildet und angeordnet, so dass zumindest ein Teil der Vielzahl von Lichtquellen innerhalb des Fluidkanalabschnittes angeordnet ist. Selbstverständlich setzt dies voraus, dass die Lichtquellen gegenüber dem Flüssigkeitskreislauf zumindest bereichsweise fluiddicht umkapselt ausgebildet sind, um zu verhindern, dass der Betrieb der Lichtquelle beeinträchtigt wird. In vorteilhafter Weise sind die Lichtquellen als lichtemittierende Dioden, kurz LED oder in Form von laserbasierten Lichtquellen ausgebildet. Selbstverständlich sind auch andere Lichtquellen grundsätzlich einsetzbar, wie beispielsweise Quecksilber-, Xenon- oder Argonlampen.

Die lösungsgemäße Vorrichtung sieht einen als Hohlzylinder ausgebildeten, fluiddurchströmten Hohlkanalabschnitt vor, dessen innere und äußere Mantelfläche jeweils ein Durchströmungsvolumen für den Flüssigkeitskreislauf radial begrenzen. Die innere Mantelfläche des hohlzylinderartig ausgebildeten Hohlkanalabschnittes stellt die wenigstens eine Begrenzungswand dar, über die die optisch aktivierbare biologische Probe thermisch an den Flüssigkeitskreislauf ankoppelt. Die thermische Ankopplung kann grundsätzlich auf zweierlei Weise realisiert werden.

Zum einen sei angenommen, dass die in Form einer Suspension vorliegende, optisch aktivierbare, biologische Probe in einem als lichttransparentes, küvettenartiges Gefäß ausgebildeten Probenbehältnis bevorratet ist. Die Begrenzungswand des Hohlkanalabschnittes ist als Teil einer Aufnahmestruktur ausgebildet, in die das küvettenartig ausgebildete Probenbehältnis einsetzbar ist, wobei die Begrenzungswand des Hohlkanalabschnittes das Probenbehältnis in dessen Umfangsrichtung vollständig umfasst, um so zu gewährleisten, dass sich die thermische Kopplung in Umfangsrichtung des Probenbehältnisses homogen ausbildet, um auf diese Weise eine möglichst isotrope Temperaturverteilung innerhalb der die biologische Probe enthaltenden Suspension zu gewährleisten. Die Aufnahmestruktur sowie das Probenbehältnis sind dabei derart geometrisch aufeinander abgestimmt, so dass das Probenbehältnis im eingesetzten Zustand innerhalb der Aufnahmestruktur die Begrenzungswand mittel- oder unmittelbar berührt und thermisch an diese vollumfänglich ankoppelt. Wie der weiteren Beschreibung in Verbindung mit dem illustrierten Ausführungsbeispiel zu entnehmen ist, umfasst die vorzugsweise geradzylinderförmig ausgebildete Begrenzungswand des Hohlkanalabschnittes ein topfförmiges Aufnahmevolumen, das durch eine Bodenplatte begrenzt und axial der Bodenplatte gegenüberliegend offen ausgebildet ist. Größe und Form des topfartigen Aufnahmevolumens ist an die Außenkontur des küvettenartigen Probenbehältnisses angepasst, so dass die Küvettenwand unmittelbar an der Begrenzungswand des Hohlkanals angrenzt und somit ideal thermisch an diese ankoppelt.

Eine zweite Realisierungsmöglichkeit verzichtet auf ein separates Probenbehältnis zur Bevorratung der in Suspension vorliegenden Probe. Die Suspension wird vielmehr direkt in das vorstehend erläuterte, topfartige Aufnahmevolumen gefüllt, so dass die Begrenzungswand des Hohlkanalabschnittes die in Suspension vorliegende Probe und das temperierte Fluid sowohl trennt als auch unmittelbar einander thermisch koppelt.

Die Vielzahl von Lichtquellen ist relativ zum hohlzylinderartig ausgebildeten Hohlkanalabschnitt derart angeordnet, so dass die jeder Lichtquelle zugeordnete Abstrahlungs-Apertur radial nach innen gerichtet ist, so dass der überwiegende Anteil des von der Lichtquelle emittierten Lichtes auf die Begrenzungswand und somit auf die radial zur Begrenzungswand innenliegend angeordnete, in Suspension vorliegende Probe gerichtet ist.

Das innerhalb des Flüssigkeitskreislaufes strömende Fluid ist lichttransparent, so dass der durch die Flüssigkeit führende Lichtweg keine oder möglichst geringe Lichtverluste verursacht. So sieht eine bevorzugte Ausbildung und Anordnung der Vielzahl von Lichtquellen einen zumindest teilumströmten Lichtquellenkörper vor der teilweise in den Hohlkanalabschnitt hineinragt und von dem temperierten Fluid direkt umströmt wird. Das von den Lichtquellen emittierte Licht durchtritt somit zum einen die lichttransparente fluiddichte Kapselung gegenüber dem Fluid, das Fluid selbst sowie zumindest die Begrenzungswand, hinter der sich die in Suspension vorliegende biologische Probe befindet. Vorzugsweise ist die Vielzahl von Lichtquellen in axialer sowie auch in Umfangsrichtung des Hohlkanalabschnittes orientierter Verteilung angeordnet, so dass die biologische Probe ebenfalls in Umfangsrichtung möglichst gleichmäßig mit Licht bestrahlt wird.

Die Vielzahl der Lichtquellen ist in wenigstens zwei Gruppen unterteilbar, wobei sich die wenigstens zwei Gruppen an Lichtquellen in einer der nachfolgenden Eigenschaften voneinander unterscheiden: Strahlintensität, emittierte Wellenlänge oder Wellenlängenspektrum. Auf diese Weise kann die Probe in kontrollierter Weise sowohl in Hinblick auf Bestrahlungsdauer, Bestrahlungsintensität sowie auch Bestrahlungsspektrum individuell und kontrolliert optisch stimuliert bzw. aktiviert werden.

Zu Zwecken der kontrollierten Bestrahlung sieht die lösungsgemäße Vorrichtung eine Steuer- und/oder Regelvorrichtung vor, die die Temperiereinheit, die Fluidpumpe und/oder die wenigstens eine Lichtquelle steuert oder regelt. Die Steuerung bzw. Regelung erfolgt unter Maßgabe einer zeitlich definiert vorgebbaren Bestrahlungszeit der Probe mit Licht bei einer konstant vorgebbaren Lichtintensität und Wellenlänge oder eines vorgebbaren Wellenlängenspektrums sowie einer definierten Temperatur innerhalb des fluiddurchströmten Flüssigkeitskreislaufes. Selbstverständlich sind abweichende Steuer- bzw. Regelungsweisen denkbar, so beispielsweise definiert variabel vorgebbare Lichtintensitäten, Wellenlängen oder Wellenlängenspektren. Auch können Untersuchungsmuster von Interesse sein, bei denen das Temperaturniveau der Probe und/oder die die Aktivierung der Lichtquellen aufeinander abgestimmt variiert werden.

Die vorstehend beschriebene, lösungsgemäße Vorrichtung zur optischen Stimulation einer optisch aktivierbaren biologischen Probe ermöglicht eine definierte optische Konditionierung bzw. optische Stimulation der Probe, deren biochemischen bzw. bioelektrischen Eigenschaft gezielt manipulierbar sind, sowie eine unmittelbar darauffolgende Detektion der Probe mit einem Durchflusszytometer ohne Zeitverzug. Die lösungsgemäße Vorrichtung erlaubt es derartige optogenetisch induzierte Manipulationen in Echtzeit mit einem Durchflusszytometer zu analysieren. Hierzu ragt das kapillare Messröhrchen des Durchflusszytometers direkt in das Aufnahmevolumen der Vorrichtung bzw. des Probengefäßes hinein, so dass eine Zellaufnahme durch das Durchflusszytometer zu Analysezwecken jederzeit, das heißt vor, während und/oder nach der optischen Stimulation der in dem Aufnahmevolumen befindlichen, optisch aktivierbaren biologischen Probe möglich ist. Hierzu ist das Aufnahmevolumen nach oben offen ausgebildet, so dass die Messkapillare des Durchflusszytometers direkt in das Aufnahmevolumen der Vorrichtung bzw. des Probenbehältnisses hineinragt. Selbstverständlich sind alternative Fluidverbindungen zwischen dem Aufnahmevolumen und dem Durchflusszytometer denkbar, beispielsweise mit Hilfe einer geeigneten ausgebildeten Fluidleitung.

Zum Zwecke eines möglichst vollautomatischen Ablaufes sowohl der optischen Stimulation der biologischen Probe als auch der Messung mit Hilfe des Durchflusszytometers steht die Steuer- und/oder Regeleinrichtung der Vorrichtung in einen Draht-gebunden oder drahtlosen Signalaustausch mit der Kontrolleinrichtung des Durchflusszytometers, so dass in Abstimmung mit der optischen Stimulation eine von Seiten des Durchflusszytometers pumpenbasierte Absaugung zumindest eines Teils der Probe aus dem Aufnahmevolumen in die Messkapillare des Durchflusszytometers erfolgt und anschließend eine zytometrische Untersuchung der Probe durchgeführt wird.

Der lösungsgemäßen Vorrichtung liegt das Verfahren zugrunde, dass vor oder während der Durchführung einer zytometrischen Untersuchung die Probe mit einer kontrolliert vorgebbaren Lichtintensität und Wellenlänge und/oder einem vorgebbaren Wellenlängenspektrum bestrahlt wird, wobei das Licht von wenigstens einer Lichtquelle emittiert wird, die von einer temperierten Flüssigkeit temperiert wird, an die zugleich die Probe selbst thermisch ankoppelt. Die Probe selbst wird dabei vorzugsweise vor, während und/oder nach der Lichtbestrahlung mittels der temperierten Flüssigkeit kontrolliert temperiert, das heißt vorzugsweise auf eine konstante Temperatur gehalten, zum Beispiel 37°C.

Die lösungsgemäße Vorrichtung ermöglicht optogenetische Effekte, die bei Bestrahlung von lebenden Zellen mit Licht hervorgerufen werden können, reversibel und zeitecht mit Hilfe des Durchflusszytometers zu messen. Die potentiellen Anwendungsmöglichkeiten sind hierzu vielfältig und erweitern sich zudem durch eine steigende Anzahl an unterschiedlichen Farbstoff-Indikatoren, die auf lebende Zellen anwendbar sind.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1a, b: Bevorzugtes Ausführungsbeispiel zur optischen Stimulation einer biologischen Probe mit einer kontrollierten Lichtmenge sowie unter einem kontrollierten Temperaturniveau,
- Fig. 2: Anordnung zur Untersuchung einer optisch aktivierten biologischen Probe,
- Fig. 3a: Illustration einer optogenetischen Reaktion einer biologischen Probe am Beispiel der Syk-Kinase sowie graphische Darstellung der mit Hilfe eines Durchflusszytometers gewonnenen Messergebnisse.

### Wege zur Ausführung der Erfindung, gewerbliche Verwendbarkeit

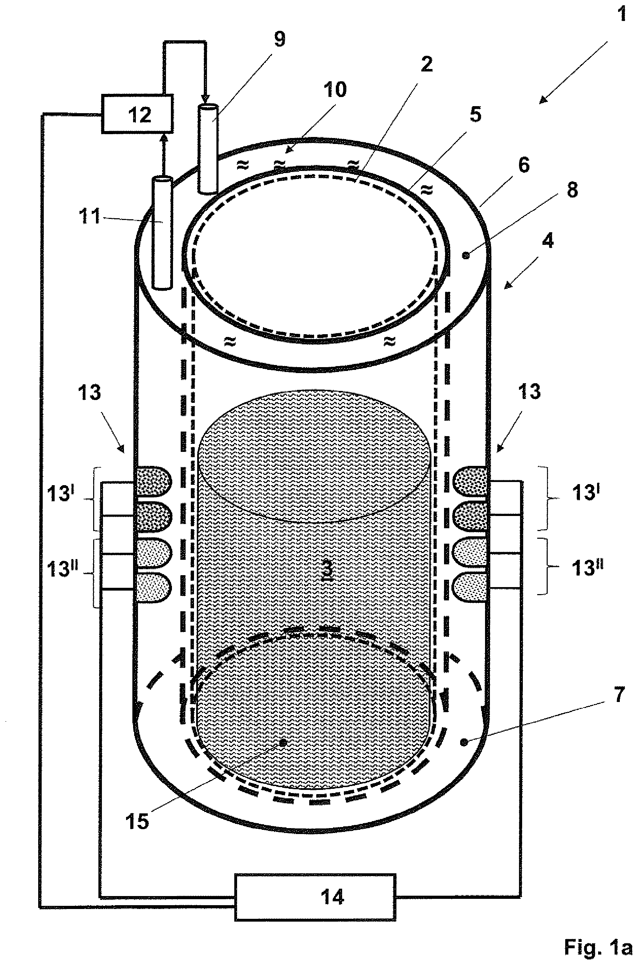

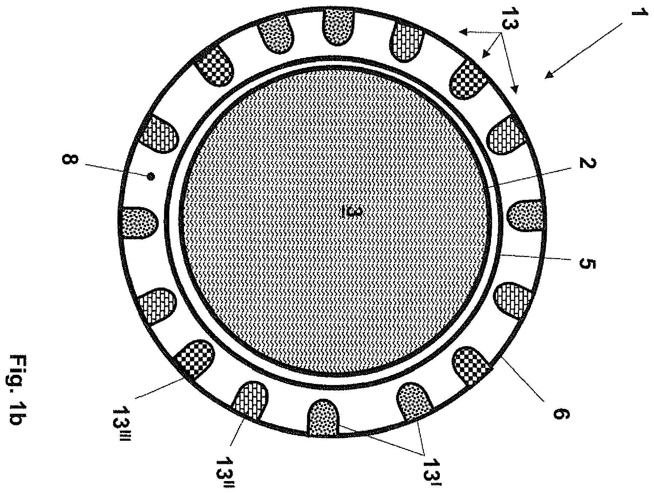

Fig. 1 zeigt eine schematisierte Ansicht eines bevorzugten Ausführungsbeispiels zur Realisierung einer Vorrichtung 1 zur optischen Stimulation einer in einem Probenbehältnis 2 befindlichen optisch aktivierbaren biologischen Probe 3. Die Vorrichtung weist ein Behältnis 4 auf, das in Art eines geraden Hohlzylinders ausgebildet ist, dessen innere Mantelfläche 5, äußere Mantelfläche 6 sowie ringförmige Bodenplatte 7 ein nach oben offen ausgebildetes Durchströmungsvolumen 8 begrenzen. Das Durchströmungsvolumen 8 stellt somit ein ringförmig, becherartiges Volumen dar, in das über eine Zuführleitung 9 ein Fluid 10, vorzugsweise Wasser, eingeleitet wird, das das Durchströmungsvolumen 8 vorzugsweise vollständig befüllt. Das Fluid 10 wird über eine Ableitung 11 einer Temperiereinheit 12 zugeführt, die Pumpenbetriebe das Fluid in einem ständigen Flüssigkeitskreislauf versetzt, so dass das in dem Durchströmungsvolumen 8 befindliche Fluid stets eine mittels der Temperiereinheit 12 vorgebbare homogene Temperatur besitzt.

Innerhalb des Durchströmungsvolumens 8 ist eine Vielzahl von LED-Lichtquellen 13 angeordnet, die von dem temperierten Fluid 10 unmittelbar umspült sind. Die Vielzahl der in das Durchströmungsvolumen 8 zumindest teilweise hineinragenden Lichtquellen 13 ist wenigstens in zwei unterschiedliche Lichtquellengruppen 13' und 13" unterteilbar, die sich jeweils durch unterschiedliche Emissionscharakteristika, beispielsweise Wellenlänge und Intensität voneinander unterscheiden. Die LED-Lichtquellen 13 sowie auch die Temperiereinheit 12 sind mit einer Steuer- und/oder Regeleinheit 14 verbunden, die sowohl für ein konstantes vorgebbares Temperaturniveau der Flüssigkeit innerhalb des Durchflussvolumens 8 sorgt sowie auch für eine konstante Emission der einzelnen Lichtquellen 13. Die innere Mantelfläche 5 ist lichttransparent, das heißt zumindest für die von Seiten der LED-Lichtquellen 13 emittierten Wellenlängen vorzugsweise vollständig transparent ausgebildet. Die innere Mantelfläche 5 stellt zudem eine Begrenzungswand dar, die zusammen mit einer unteren Bodenplatte 15, die zugleich die untere Begrenzungswand des becherförmig ausgebildeten Behälters 4 darstellt, ein einseitig offenes, zylinderförmig ausgebildetes Aufnahmevolumen begrenzt, in das von oben das küvettenartig ausgebildete Probenbehältnis 2 einsetzbar ist, das zumindest teilweise mit der optisch aktivierbaren biologischen Probe 3 befüllt ist. Die äußere Mantelfläche 6 ist hingegen intransparent ausgebildet, so dass keinerlei Licht in das äußere Umfeld gelangen kann. Dies ist aus sicherheitsrelevanten Aspekten geboten, vor allem in Fällen in denen UV-Licht emittierende Lichtquellen zum Einsatz kommen.

Das Probenbehältnis 2 und die Begrenzungswand bzw. innere Mantelfläche 5 des das Durchströmungsvolumen 8 umfassende Behältnisses 4 bezüglich ihrer Größe und Raumform derart aufeinander abgestimmt ausgebildet, so dass das Probenbehältnis 2 und damit die darin befindliche suspendierte biologische Probe 3 thermisch über die Begrenzungswand 5 an die temperierte Flüssigkeit 10 ankoppelt. Auf diese Weise werden sowohl die LED-Lichtquellen 13 als auch die in dem Probenbehältnis 2 befindliche biologische Probe auf ein konstant vorgebbares Temperaturniveau gehalten. Der Zwischenspalt zwischen dem Probenbehältnis 2 und der inneren Mantelfläche 5 ist derart bemessen, so dass ein leichtes Einsetzen des Probenbehältnisses 2 in das Aufnahmevolumen sowie auch eine entsprechende Entnahme möglich sind, zugleich jedoch für eine möglichst innige, d.h. verlustfreie, thermische Kopplung zwischen dem Probenbehältnis 2 und der inneren Mantelfläche 5 bzw. Begrenzungswand gesorgt ist.

In Fig. 1b ist eine Querschnittsdarstellung durch die Vorrichtung 1 gezeigt, anhand der die Anordnung einer Vielzahl einzelner LED-Lichtquellen 13, die vorzugsweise gleich verteilt in Umfangsrichtung um die hohlzylinderförmig ausgebildete Vorrichtung 1 angeordnet ist, dargestellt ist. Anhand der unterschiedlichen Schraffuren der einzelnen LED-Lichtquellen 13 soll verdeutlicht werden, dass LED-Lichtquellen unterschiedlicher Wellenlänge auch in Umfangsrichtung U verteilt angeordnet sind. So sei angenommen, dass die in Fig. 1b illustrierte Vorrichtung über drei unterschiedliche LED-Lichtquellen 13^{I}, 13^{II}, 13^{III} verfügt.

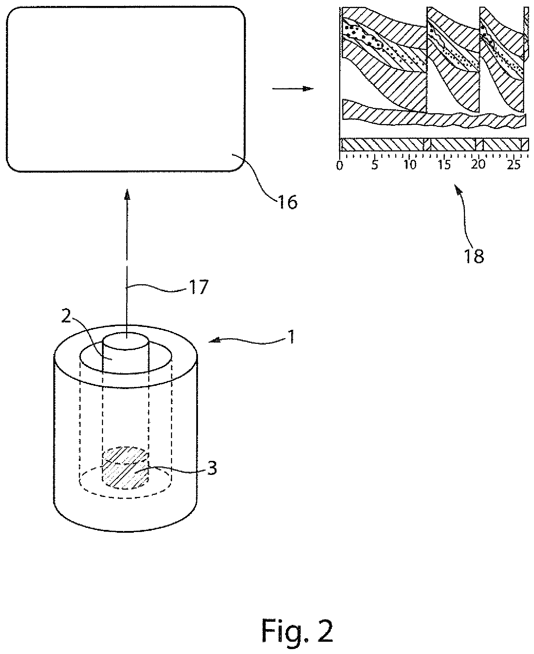

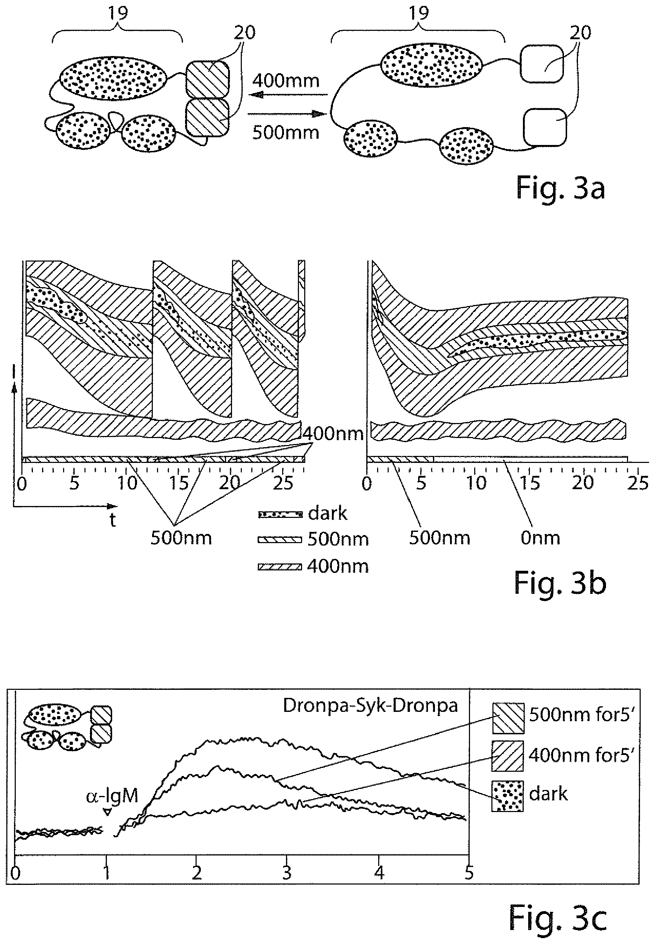

Figur 2 zeigt eine Kombination der in Fig. 1a, b illustrierten Vorrichtung 1 zur optischen Stimulation der in dem Probenbehältnis 2 eingebrachten optisch aktivierbaren biologischen Probe 3 mit einem Durchflusszytometer 16, dessen Zuführleitung bzw. Messkapillare 17 von oben in das Probenbehältnis 2 zu Zwecken eines Ansaugens der Probe in das Durchflusszytometer 16 hineinragt. Durch diese direkte Kombination ist eine zytometrische Messung der biologischen Probe 3 vor, während und nach einer kontrolliert, durchgeführten optischen Stimulation möglich. Auf diese Weise können zytometrische Messungen unter kontrollierten Bedingungen an lebenden Zellen durchgeführt werden, um so ein zytometrisches Messergebnis 18 zu erhalten, anhand dem Erkenntnisse über optisch stimulierte Änderungen bezüglich biologischer Signale und Signalwege in der Zelle gewonnen werden können. Nähere Erläuterungen, hierzu siehe Figurenbeschreibung zu Fig. 3b. Die potentiellen Anwendungsmöglichkeiten der lösungsgemäßen Vorrichtung sind vielzählig, ein Beispiel soll im Weiteren detaillierter erläutert werden.

Die so genannte Syk-Kinase stellt eine zentrale regulierende Kinase in B-Lymphozyten sowie auch in vielen anderen Zelltypen dar und bildet die Grundlage für eine zytometrische Untersuchung. Beide Endabschnitte der Syk-Kinase sind zu Zwecken der optischen Aktivierung jeweils mit einem Dronpa-Protein fusioniert. Dronpa-Proteine dimerisieren bei Bestrahlung mit Licht einer Wellenlänge von 400nm und diffuziieren bei einer Bestrahlung mit Licht von 500nm.

In Fig. 3 a ist dieser optisch aktivierbare Vorgang illustriert. Es sei angenommen, dass das Enzym Syk-Kinase 19 jeweils beidseitig, endseitig mit einem Dronpa-Protein 20 fusioniert ist. Durch Bestrahlung des Dronpa-Syk-Dronpa-Fusionsproteins 19 + 20 kann die Konformation und damit die Aktivität der Syk-Kinase per Licht reguliert werden. Durch die Bestrahlung mit Licht einer Wellenlänge von 400nm wird die Dronpa-Dimerisierung und eine Konformationsänderung hin zur geschlossenen, inaktiven Form von Syk 19 induziert, das in Figur. 3a in der linken Bilddarstellung illustriert ist. Wird hingegen das Dronpa-Syk-Dronpa-Fusionsprotein 19 + 20 mit Licht einer Wellenlänge von 500nm bestrahlt, so wird eine Dronpa-Dissoziation und eine Konformationsänderung zur offenen, aktiven Form von Syk, siehe Figur 3a rechte Bilddarstellung, induziert.
dass dissoziiertes Dronpa nicht fluoresziert, während nur die dimerisierte Form von Dronpa fluoresziert
Um zu überprüfen, ob die lösungsgemäße Vorrichtung in der Lage ist, das Dronpa-Syk-Dronpa-Fusionsprotein 19+20 zu dimerisieren sowie auch zu dedimerisieren wurden Messungen (siehe Figur. 3b) über die Zeit t in Minuten durchgeführt. Für die Messung und Auswertung wird die Eigenschaft des Dronpa genutzt, dass dissoziiertes Dronpa nicht fluoresziert, während nur die dimerisierte Form von Dronpa fluoresziert.

Die dargestellten Diagramme zeigen längs der Y-Achse die Fluoreszenz-Intensität I des Fluoreszenz-Farbstoffes GFP, der als Indikator für die Assoziation bzw. Dissoziation von Dronpa dient. Der jeweils in den beiden Diagrammen in Figur 3b untere Farbbalken signalisiert, mit welcher Wellenlänge die Zellsuspension über die Zeit t bestrahlt wurde.

Aus den Messergebnissen kann deutlich entnommen werden, dass die Dronpa-Fluoreszenz-Intensität bei Bestrahlung mit grünem Licht, das heißt mit Wellenlängen von 500nm signifikant abnimmt, das heißt Dronpa dissoziiert, siehe auch Figur 3a. Hingegen nimmt die Fluoreszenz-Intensität von Dronpa bei Bestrahlung mit violettem Licht, das heißt mit einer Wellenlänge von 400nm signifikant zu, das heißt Dronpa dimerisiert.

Mit den vorstehenden Bedingungen sind im Weiteren für die Photo-Regulierung von Syk Calcium-Messungen durchgeführt worden. Hierzu sind die zu untersuchenden Zellen zunächst mit einem Calcium-Farbstoff kombiniert worden, mit dem sich der relative Calcium-Influx messen lässt. Die auf diese Weise eingefärbten Zellen werden innerhalb der lösungsgemäßen Vorrichtung mit entsprechenden Wellenlängen bestrahlt bzw. stimuliert. Zeitgleich werden aus dem Probenbehältnis optisch aktivierte Zellen in den Durchflusszytometer zur Analyse aufgenommen. In der Graphik aus Figur 3c sind der relative Calcium-Influx in die Zelle auf der Y-Achse über die Zeit in Minuten auf der X-Achse dargestellt. Die Zellen wurden während der gesamten Messung entsprechend der Beschriftung entweder nicht (dark), oder mit 400nm bzw. 500nm illuminiert. Gleichzeitig werden die Zellen mit anti-IgM stimuliert (siehe Pfeil in der Graphik) um einen Calcium-Influx zu initiieren.

Die in Figur 3c dargestellten Ergebnisse zeigen, dass durch lichtinduzierte Veränderung der Konformation des Dronpa-Syk-Dronpa-Fusionsproteins der Calcium-Flux der Zellen reguliert werden kann.

Zusammenfassend kann festgehalten werden, dass die lösungsgemäße Vorrichtung ideal dazu geeignet ist, optogenetisch regulierte Signalwege in lebenden Zellen zu untersuchen. In dem vorstehend gezeigten Beispiel wurden die Konformation einer Kinase und damit ihre Aktivität optogenetisch reguliert.

Die experimentellen Möglichkeiten des Einsatzes der lösungsgemäßen Vorrichtung gehen jedoch weit über die vorstehend erläuterte Calcium-Messung hinaus. So lässt sich grundsätzlich jeder Farbstoff-Indikator, der auf lebende Zellen anwendbar ist, mittels der lösungsgemäßen Vorrichtung in kontrolliert und reproduzierbarer Weise optisch aktivieren. Auch bietet die lösungsgemäße Vorrichtung die Möglichkeit, Zellen mit so genannten "photo-cage components" sowie "photo-activatable Reagents" zu stimulieren. Hierbei handelt es sich um eine Vielzahl von Substanzen, die durch Bestrahlung mit Licht einer bestimmten Wellenlänge freigesetzt oder aktiviert werden können.

Ein Beispiel dafür ist das so genannte "DMNB-caged cAMP". Das Signalmolekül cAMP wird durch Bestrahlung mit Licht einer Wellenlänge von 350nm freigesetzt. Mit Hilfe der lösungsgemäßen Vorrichtung können Effekte des freigesetzten cAMPs direkt gemessen werden.

### Bezugszeichenliste

- 1: Vorrichtung zur optischen Stimulation einer biologischen Probe
- 2: Probenbehältnis
- 3: Biologische Probe
- 4: Becherartig ausgebildetes Gehäuse
- 5: Innere Mantelfläche
- 6: Äußere Mantelfläche
- 7: Ringförmige Bodenplatte
- 8: Durchströmungsvolumen
- 9: Zuleitung
- 10: Fluid
- 11: Ableitung
- 12: Temperiereinheit
- 13: LED
- 13I - 13V: LED-Gruppen
- 14: Steuer- und/oder Regeleinheit
- 15: Bodenplatte
- 16: Durchflusszytometer
- 17: Messkapillare
- 18: Messergebnis
- 19: Syk-Kinase
- 20: Dronpa

## Patentansprüche

1. Vorrichtung zur optischen Stimulation einer optisch aktivierbaren biologischen Probe (3) mit einer Vielzahl von Lichtquellen (13), die Licht wenigstens einer vorgebbaren Wellenlänge emittiert, das mittel- oder unmittelbar auf die Probe (3) trifft, wobei
die Vielzahl der Lichtquellen (13) thermisch an einen in Art eines Hohlzylinders ausgebildeten Hohlkanalabschnitt ankoppelt, der Teil eines fluiddurchströmten Flüssigkeitskreislaufes ist und dessen innere und äußere Mantelfläche (5, 6) ein Durchströmungsvolumen (8) des Flüssigkeitskreislaufes radial begrenzen, längs dem eine Temperiereinheit (12) sowie eine Förderpumpe angeordnet sind, und der Hohlkanalabschnitt wenigstens eine Begrenzungswand aufweist, die geeignet ausgebildet ist, um eine optisch aktivierbare biologische Probe (3) thermisch anzukoppeln,
**dadurch gekennzeichnet, dass** die innere Mantelfläche (5) die wenigstens eine Begrenzungswand darstellt, über die die optisch aktivierbare Probe (3) thermisch an den Flüssigkeitskreislauf ankoppelt und für das Licht der Vielzahl von Lichtquellen (13) transparent ist,
dass die Vielzahl von Lichtquellen (13) mit einer axialen Verteilung und/oder in Umfangsrichtung des Hohlkanalabschnittes orientierten Verteilung sowie mit jeweils einer radial nach innen orientierten, den Lichtquellen (13) zugeordneten Abstrahlungs-Apertur angeordnet ist, und
dass die Lichtquellen (13) wenigstens in zwei Gruppen (13I-13V), jeweils enthaltend wenigstens eine Lichtquelle, unterteilbar sind, die sich in einer der nachfolgenden Eigenschaften voneinander unterscheiden: Strahlungsintensität, emittierte Wellenlänge oder Wellenlängenspektrum.

2. Vorrichtung nach Anspruch 1,
**dadurch gekennzeichnet, dass** zumindest ein Teil der Vielzahl von Lichtquellen (13) innerhalb des Hohlkanalabschnittes angeordnet ist.

3. Vorrichtung nach Anspruch 1 oder 2,
**dadurch gekennzeichnet, dass** die Vielzahl von Lichtquellen (13) LEDs oder Laserbasierte Lichtquellen sind.

4. Vorrichtung nach einem der Ansprüche 1 bis 3,
**dadurch gekennzeichnet, dass** die optisch aktivierbare biologische Probe (3) in einem Probenbehältnis (2) bevorratet ist,
dass das Probenbehältnis (2) ein lichttransparentes, küvettenartiges Gefäß ist, das ein Aufnahmevolumen begrenzt, und
dass die Begrenzungswand des Hohlkanalschnittes Teil einer Aufnahmestruktur ist, in die das Probenbehältnis (2) derart einsetzbar ist, so dass die Begrenzungswand das Probenbehältnis (2) in dessen Umfangsrichtung vollständig umfasst.

5. Vorrichtung nach Anspruch 4,
**dadurch gekennzeichnet, dass** die Aufnahmestruktur und das Probenbehältnis (2) derart aufeinander abgestimmt dimensioniert sind, dass das Probenbehältnis (2) im eingesetzten Zustand innerhalb der Aufnahmestruktur mittel- oder unmittelbar die Begrenzungswand berührt und thermisch an diese ankoppelt.

6. Vorrichtung nach einem der Ansprüche 1 bis 5,
**dadurch gekennzeichnet, dass** eine Steuer- und/oder Regeleinrichtung (14) vorgesehen ist, die die Temperiereinheit (12), die Fluidpumpe und/oder die wenigstens eine Lichtquelle (13) steuert oder regelt unter Maßgabe einer zeitlich definiert vorgebbaren Bestrahlungszeit der Probe (3) mit Licht einer konstant vorgebbaren Lichtintensität und Wellenlänge oder eines vorgebaren Wellenlängenspektrum sowie mit einer Temperatur innerhalb des fluiddurchströmten Flüssigkeitskreislaufes.

7. Anordnung zur Untersuchung einer optisch aktivierten biologischen Probe (3) mit einer Vorrichtung nach einem der Ansprüche 4 bis 6 sowie einem Durchflusszytometer (16), das über eine Verbindungsleitung mit dem Aufnahmevolumen in Fluidverbindung steht.

8. Anordnung nach Anspruch 7,
**dadurch gekennzeichnet, dass** die Steuer- und/oder Regeleinrichtung (14) drahtgebunden oder drahtlos in Signalaustausch mit einer Kontrolleinrichtung des Durchflusszytometer (16) steht, durch die eine pumpenbasierte Absaugung zumindest eines Teils der Probe (3) aus dem Aufnahmevolumen über die Fluidverbindung in das Durchflusszytometer (16) sowie eine anschließende zytometrische Untersuchung der Probe (3) initiierbar sind.

9. Verfahren zur Durchführung einer optischen Stimulation einer optisch aktivierbaren biologischen Probe (3), zu deren optischen Aktivierung Licht mit einer kontrolliert vorgebbaren Lichtintensität und Wellenlänge und/oder einem vorgebbaren Wellenlängenspektrum auf die Probe (3) gestrahlt wird, unter Verwendung einer Vorrichtung einem der Ansprüche 1 bis 8, wobei das Licht von wenigstens zwei Lichtquellen (13) emittiert wird, die von einer temperierten Flüssigkeit temperiert werden, an die zugleich die Probe (3) thermisch ankoppelt und sich deren emittiertes Licht in Bezug auf Strahlungsintensität, emittierte Wellenlänge und/oder Wellenlängenspektrum voneinander unterscheiden.

10. Verfahren nach Anspruch 9,
**dadurch gekennzeichnet, dass** vor, während und nach der Lichtbestrahlung der biologischen Probe (3) die Probe mittels der temperierten Flüssigkeit kontrolliert temperiert wird.

11. Verfahren nach Anspruch 9 oder 10,
**dadurch gekennzeichnet, dass** die temperierte Flüssigkeit einen Hohlkanalabschnitt durchströmt, an den sowohl die biologische Probe (3) als auch die Vielzahl von Lichtquellen (13) thermisch ankoppeln, wobei die biologische Probe (3) und die Vielzahl von Lichtquellen (13) konvektiv temperiert werden.

12. Verwendung der Anordnung nach einem der Ansprüche 7 oder 8 zur Untersuchung optisch regulierter Signalwege und/oder Signalmoleküle in biologischen Zellen.

## Claims

1. A device for the optical stimulation of an optically activatable biological sample (3), with a multiplicity of light sources (13), which emits light of at least one predeterminable wavelength, which impinges directly or indirectly on the sample (3), wherein
the multiplicity of light sources (13) is thermally coupled to a hollow channel section designed in the manner of a hollow cylinder, which hollow channel section is part of a fluid circuit through which fluid flows, and whose inner and outer casing surfaces (5, 6) radially bound a flow volume (8) of the fluid circuit, along which a temperature control unit (12) and a feed pump are arranged, and the hollow channel section has at least one bounding wall that is suitably designed for the thermal coupling of an optically activatable biological sample (3),
**characterised in that**,
the inner casing surface (5) represents the at least one bounding wall, via which the optically activatable sample (3) is thermally coupled to the fluid circuit, and is transparent to the light of the multiplicity of light sources (13),
**in that**,
the multiplicity of light sources (13) is arranged with an axial distribution and/or a distribution oriented in the circumferential direction of the hollow channel section, and with a radially inward-oriented radiation aperture assigned to each of the light sources (13),
and **in that**
the light sources (13) can be divided into at least two groups (13I-13V), each containing at least one light source, which differ from one another in one of the following properties: radiation intensity, emitted wavelength, or wavelength spectrum.

2. The device in accordance with claim 1,
**characterised in that**,
at least a fraction of the multiplicity of light sources (13) is arranged within the hollow channel section.

3. The device in accordance with claim 1 or 2,
**characterised in that**,
the multiplicity of light sources (13) are LEDs or laser-based light sources.

4. The device in accordance with one of the claims 1 to 3,
**characterised in that**,
the optically activatable biological sample (3) is stored in a sample container (2),
**in that**
the sample container (2) is a light-transparent, cuvette-type vessel, which bounds an accommodating volume,
and **in that**,
the bounding wall of the hollow channel section is part of an accommodating structure, into which the sample container (2) can be inserted such that the bounding wall completely surrounds the sample container (2) in its circumferential direction.

5. The device in accordance with claim 4,
**characterised in that**,
the accommodating structure and the sample container (2) are dimensioned so as to be matched to one another, such that in the inserted state, the sample container (2) touches the bounding wall directly or indirectly within the accommodating structure, and is thermally coupled to the latter.

6. The device in accordance with one of the claims 1 to 5,
**characterised in that**,
a control and/or regulation device (14) is provided, which controls or regulates the temperature control unit (12), the fluid pump, and/or the at least one light source (13), in accordance with an irradiation time of the sample (3), which irradiation time can be predetermined in terms of time, with light of a constant predeterminable light intensity and wavelength, or a predeterminable wavelength spectrum, together with a temperature within the fluid circuit through which the fluid flows.

7. An arrangement for the examination of an optically activated biological sample (3) with a device in accordance with one of the claims 4 to 6,
together with a flow cytometer (16), which is in fluid communication with the accommodating volume via a connecting line.

8. The arrangement in accordance with claim 7,
**characterised in that**,
the control and/or regulation device (14) exchanges signals, in a wired or wireless manner, with a control device of the flow cytometer (16), by means of which a pump-based suction of at least a part of the sample (3) can be initiated from the accommodating volume, via the fluid communication, into the flow cytometer (16), together with a subsequent cytometric examination of the sample (3).

9. A method for the execution of an optical stimulation of an optically activatable biological sample (3), for the optical activation of which light with a controlled predeterminable light intensity and wavelength, and/or a predeterminable wavelength spectrum, is irradiated onto the sample (3), using a device in accordance with one of the claims 1 to 8, wherein
the light is emitted by at least two light sources (13), which are temperature-controlled by a temperature-controlled fluid, to which the sample (3) is at the same time thermally coupled, and whose emitted light differs from one to another in terms of radiation intensity, emitted wavelength, and/or wavelength spectrum.

10. The method in accordance with claim 9,
**characterised in that**,
before, during and after the light irradiation of the biological sample (3), the sample is temperature-controlled by means of the temperature-controlled fluid.

11. The method in accordance with claim 9 or 10,
**characterised in that**,
the temperature-controlled fluid flows through a hollow channel section, to which both the biological sample (3), and also the multiplicity of light sources (13), are thermally coupled, wherein
the biological sample (3) and the multiplicity of light sources (13) are temperature-controlled in a convective manner.

12. A use of the arrangement in accordance with one of the claims 7 or 8,
for the examination of optically regulated signal paths and/or signalling molecules in biological cells.

## Revendications

1. Dispositif de simulation optique d'un échantillon (3) pouvant être optiquement activé avec une pluralité de sources lumineuses (13), qui émet de la lumière au moins d'une longueur d'onde prédéfinissable, qui vient directement ou indirectement l'échantillon (3), sachant que
la pluralité de sources lumineuses (13) s'accouple thermiquement à une section de conduit creux constituée sous la forme d'un cylindre creux, est la partie d'un circuit de liquide traversé par un fluide et dont la surface d'enveloppe intérieure et la surface d'enveloppe extérieure (5, 6) délimitent radialement un volume d'écoulement (8), le long duquel sont disposées une unité de thermorégulation (12) ainsi qu'une pompe d'alimentation et la section de conduit creux comporte au moins une paroi de délimitation qui est constituée adaptée pour coupler thermiquement un échantillon (3) biologique pouvant être optiquement activé, **caractérisé en ce que** la surface d'enveloppe intérieure (5) représente au moins une paroi de délimitation par laquelle l'échantillon (3) pouvant être optiquement activé est couplé thermiquement au circuit de liquide et est transparent pour la lumière de la pluralité de sources lumineuses (13),
**en ce que** la pluralité de sources lumineuses (13) est disposée avec une répartition axiale et/ou une orientée en direction périphérique de la section de conduit creux ainsi qu'avec respectivement une ouverture de rayonnement orientée radialement vers l'intérieur, attribuée aux sources lumineuses (13), et
**en ce que** les sources lumineuses (13) sont subdivisibles au moins en deux groupes (13I-13V), contenant respectivement au moins une source lumineuse qui se différencient l'une de l'autre par une des propriétés suivantes : intensité de rayonnement, longueur d'onde émise ou spectre de longueur d'ondes.

2. Dispositif selon la revendication 1,
**caractérisé en ce que**
qu'au moins une partie de la pluralité des sources lumineuses (13) est disposée à l'intérieur de la section de conduit creux.

3. Dispositif selon la revendication 1 ou 2,
**caractérisé en ce que**
la pluralité de sources lumineuses (13) est constitué de sources lumineuses à base de DEL (diodes électroluminescentes) ou de laser.

4. Dispositif selon l'une quelconque des revendications 1 à 3,
**caractérisé en ce que** l'échantillon (3) biologique pouvant être optiquement activé est stocké dans un contenant d'échantillon (2),
**en ce que** le contenant d'échantillon (2) est un récipient transparent à la lumière, de type cuvette, qui délimite un volume de réception, et
**en ce que** la paroi de délimitation de la section de conduit creux est une partie d'une structure de réception dans laquelle le contenant d'échantillon (2) peut être introduit de telle manière que la paroi de délimitation entoure complètement le contenant d'échantillon (2) en direction de sa périphérie.

5. Dispositif selon la revendication 4,
**caractérisé en ce que**
la structure de réception et le contenant d'échantillon (2) sont dimensionnés de façon harmonisée l'un par rapport à l'autre de telle manière que le contenant d'échantillon (2) à l'état introduit à l'intérieur de la structure de réception touche directement ou indirectement la paroi de délimitation et est thermiquement couplé à celle-ci.

6. Dispositif selon l'une quelconque des revendications 1 à 5,
**caractérisé en ce**
**qu'**un dispositif de commande et/ou de régulation (14) est prévu, qui pilote ou régule l'unité de thermorégulation (12), la pompe de fluide et/ou au moins une source lumineuse (13) sous condition d'une durée d'irradiation prédéfinissable de manière définie dans le temps de l'échantillon (3) avec une lumière d'une intensité lumineuse et longueur d'ondes constamment prédéfinissables ou d'un spectre de longueur d'onde prédéfinissable ainsi qu'avec une température à l'intérieur du circuit de liquide traversé par un fluide.

7. Système destiné à analyser un échantillon (3) biologique optiquement activé avec un dispositif selon l'une quelconque des revendications 4 à 6 ainsi qu'un cytomètre à flux (16), qui est en liaison du point de vue fluide avec le volume de réception par le biais d'un conduit de liaison.

8. Système selon la revendication 7,
**caractérisé en ce que** le dispositif de commande et/ou de régulation (14) est relié par fil ou sans fil en échange de signaux avec un dispositif de contrôle du cytomètre à flux (16) par lequel sont initiées une aspiration basée sur une pompe d'au moins une partie de l'échantillon (3) à partir du volume de réception par le biais de la liaison de fluide dans le cytomètre à flux (16) ainsi qu'une analyse cytométrique suivante de l'échantillon (3).

9. Procédé d'exécution d'une simulation optique d'un échantillon (3) biologique pouvant être optiquement activé pour l'activation optique duquel de la lumière est projetée sur l'échantillon (3) avec une intensité et une longueur d'onde et/ou un spectre de longueur d'onde prédéfinissable de façon contrôlée en utilisant un dispositif selon l'une quelconque des revendications 1 à 8, sachant que la lumière est émise par au moins deux sources lumineuses (13), qui sont thermorégulées par un liquide thermorégulé auquel l'échantillon (3) est en même temps thermiquement couplé et dont la lumière émise de celles-ci se différencie eu égard à l'intensité de rayonnement, la longueur d'onde émise et/ou le spectre de longueur d'ond.

10. Procédé selon la revendication 9,
**caractérisé en ce qu'**avant, pendant et après le rayonnement lumineux de l'échantillon biologique (3), l'échantillon est thermorégulé de façon contrôlée au moyen du liquide thermorégulé

11. Procédé selon la revendication 9 ou 10,
**caractérisé en ce que** le liquide thermorégulé traverse une section de conduit creux à laquelle se couple thermiquement tant l'échantillon biologique (3) que la pluralité de sources lumineuses (13), sachant que l'échantillon biologique (3) et la pluralité de sources lumineuses (13) sont thermorégulés de façon convective.

12. Utilisation du système selon l'une quelconque des revendications 7 ou 8 pour analyser des trajectoires de signaux optiquement régulées et/ou molécules de signaux dans les cellules biologiques.
